# FASCICULE DE BREVET EUROPEEN

(11) **EP 3 204 700 B1**
(45) Date de publication et mention de la délivrance du brevet: **03.10.2018**
(21) Numéro de dépôt: 15775702.2
(22) Date de dépôt: 07.10.2015
(51) Int. Cl.: F24S 23/70, F24S 20/20, F24S 30/425

(54) **PROCÉDÉ DE GUIDAGE EN ROTATION D'UN RÉFLECTEUR SOLAIRE ET RÉFLECTEUR SOLAIRE**
VERFAHREN ZUR FÜHRUNG EINES SONNENREFLEKTORS IN EINER DREHUNG UND SONNENREFLEKTOR
METHOD FOR GUIDING A SOLAR REFLECTOR IN ROTATION AND SOLAR REFLECTOR

(30) Priorité: 09.10.2014 FR 1459687
(43) Date de publication de la demande: 16.08.2017
(73) Titulaire: Commissariat à l'Énergie Atomique et aux Énergies Alternatives, 75015 Paris (FR)
(72) Inventeur: VIDAL, Frédéric, F-38230 Charvieu (FR)
(74) Mandataire: Brevalex
(86) Numéro de dépôt international: PCT/EP2015/073140
(87) Numéro de publication internationale: WO 2016/055516

(56) Documents cités:
- WO-A2-02/02995

## Description

### DOMAINE TECHNIQUE

La présente invention se rapporte au domaine général des centrales (ou installations) solaires, et plus spécifiquement au domaine des systèmes de mise en rotation de réflecteurs solaires présents dans de telles centrales.

L'invention trouve en particulier son application, mais de façon non limitative, dans le domaine du solaire thermique à concentration (ou encore domaine du « CSP » pour « Concentrated Solar Power » anglais), et plus précisément encore dans le domaine des réflecteurs à miroirs de Fresnel linéaires (ou encore domaine du « CLFR » pour « Compact Linear Fresnel Reflector »).

L'invention propose ainsi un procédé de guidage en rotation d'un réflecteur solaire ainsi qu'un réflecteur solaire entraîné en rotation et une centrale solaire comportant une pluralité de tels réflecteurs solaires.

### ÉTAT DE LA TECHNIQUE ANTÉRIEURE

Parmi les technologies connues de la filière du solaire thermodynamique, il existe la technologie du solaire thermique à concentration (CSP), telle que décrit, par exemple, dans l'art antérieur WO 02/02995 A2, qui utilise des lentilles ou des miroirs pour concentrer le rayonnement solaire sur une petite surface. Plus précisément, la technologie de réflecteurs à miroirs de Fresnel linéaires (CLFR) est l'une des solutions solaires thermiques à concentration les plus fiables et les plus simples.

La technologie CLFR permet typiquement de générer de la vapeur d'eau. Celle-ci repose sur l'utilisation de concentrateurs de Fresnel comprenant des miroirs primaires quasi-plats et modulaires, appelés réflecteurs compacts linéaires, qui pivotent en suivant la course du soleil pour rediriger et concentrer en permanence les rayons solaires vers des récepteurs situés sur des tubes contenant de l'eau. La concentration des rayons du soleil fait bouillir l'eau à l'intérieur des tubes, produisant ainsi de la vapeur saturée et surchauffée. Cette vapeur peut ensuite être utilisée pour produire de l'électricité ou pour des procédés industriels utilisant la vapeur d'eau.

La mise en rotation des réflecteurs des centrales solaires est nécessaire pour pouvoir suivre en permanence la course du soleil et capter ses rayonnements lumineux. Ainsi, de façon habituelle, les réflecteurs sont montés en rotation, par le biais d'éléments mobiles motorisés, sur une structure de support au sol fixe suivant plusieurs lignes parallèles comprenant chacune une série de plusieurs réflecteurs.

Or, lors de la mise en rotation d'une structure souple, telle qu'un réflecteur solaire, par rapport à un support fixe, il est fortement souhaitable de pouvoir équilibrer la partie tournante par rapport à son ou ses axes de rotation afin d'optimiser l'ensemble des éléments structurels. En effet, un tel équilibrage procure de multiples avantages, et peut en particulier permettre de limiter les valeurs du ou des couples de force nécessaires pour assurer l'orientation du réflecteur, et donc ainsi permettre de limiter la puissance totale requise pour la rotation ainsi que la consommation des moteurs. De plus, un tel équilibrage peut également permettre de réduire les frottements car les forces appliquées au niveau des éléments mobiles, tels que des paliers, sont plus faibles.

Cependant, les solutions actuelles connues de l'art antérieur, qui sont employées pour la mise en rotation des réflecteurs de centrales solaires, ne sont pas entièrement satisfaisantes. En effet, elles ne parviennent généralement pas à optimiser au mieux la rotation des réflecteurs par un équilibrage adéquat de ceux-ci relativement à leur(s) axe(s) de rotation.

En particulier, même s'il est en pratique techniquement possible de positionner un réflecteur solaire dans sa position d'équilibre, c'est-à-dire de se placer suffisamment près du centre de gravité pour que le couple de force dû à l'équilibrage soit inférieur au couple de force dû aux frottements induits par la gravité, car les axes de rotation des réflecteurs sont généralement positionnés par construction et l'équilibrage peut être maîtrisé grâce au respect de tolérances de fabrication adaptées, ou grâce à des moyens de réglage pour centrer au mieux les axes (équilibrage), cette position d'équilibre n'est toutefois pas conservée au cours de la rotation, la position du centre de gravité évoluant sans cesse au cours de cette rotation du fait de la déformée due à la gravité qui change avec l'inclinaison des parties mobiles. Ce phénomène est d'ailleurs d'autant plus marqué avec une structure optimisée, telle qu'un réflecteur solaire, qui se déforme davantage du fait de sa souplesse.

La variation de position du centre de gravité au cours de la rotation modifie donc l'équilibrage du réflecteur solaire, et induit alors des couples de force parasites supplémentaires qui augmentent la déformation du système global lui-même. Cette déformation peut être limitée par le biais de moyens de réglage permettant d'ajuster au mieux la position d'équilibre, en particulier en décalant, en fonction de l'inclinaison, le ou les axes de rotation du réflecteur au plus proche de la nouvelle position du centre de gravité. Toutefois, ce principe de décalage présente le plus souvent peu d'intérêt quant à l'optimisation souhaitée en termes d'équilibrage et de diminution des frottements. En effet, en général une fois réglé, le centre de rotation est fixe et les couples parasites supplémentaires dus à un déplacement du centre de gravité sont subis par le système. En général, les composants sont donc dimensionnés afin d'être suffisamment rigides pour que les déplacements du centre de gravité soient acceptables et aussi pour que la déformée supplémentaire induite par les efforts parasites résultants soit acceptable.

Ces couples parasites supplémentaires entraînant des torsions, ils limitent tout de même la réduction du poids des éléments ainsi que la longueur maximale d'une ligne de réflecteurs entraînée avec un seul moteur. Néanmoins, ce principe de décalage ne s'avère pratiquement utile que dans le cas de la réalisation de lignes de réflecteurs de grandes longueurs entraînées par le biais d'un seul moteur.

A titre d'exemples, il est présenté ci-après trois grands principes de mise en rotation des réflecteurs solaires, que l'on retrouve tout particulièrement sur les centrales solaires comportant des lignes de réflecteurs à miroirs de Fresnel linéaires (CLFR).

Tout d'abord, il existe un principe de mise en rotation des réflecteurs, peu courant, qualifié de principe de rotation « roulant », qui utilise une roue dentée circulaire en déplacement sur une surface plane formant une crémaillère, ce déplacement entraînant la rotation. Ce principe est caractérisé par un roulement sans glissement avec un point de contact qui se déplace sur la roue, faisant office d'arbre de rotation, en fonction de l'inclinaison des réflecteurs.

Il existe également un principe de mise en rotation des réflecteurs, fréquemment utilisé dans les centrales solaires, qualifié de principe de rotation « sur vireurs », qui consiste en l'utilisation d'un arbre de rotation cylindrique reposant sur deux galets. Ce principe est caractérisé par deux points de contact distincts, le centre de rotation étant situé sur la médiatrice du segment passant par les centres des deux galets, cette médiatrice formant un axe d'appui.

Enfin, il existe aussi un principe de mise en rotation des réflecteurs, couramment utilisé dans les centrales solaires, qualifié de principe de rotation « sur paliers », qui consiste quant à lui en l'utilisation d'un arbre de rotation cylindrique porté par un trou cylindrique ajusté au diamètre de l'arbre. En général, un coussinet est logé dans le trou afin de réduire les frottements. Ce principe est alors caractérisé par un contact de surface contre surface, le centre de rotation étant situé au centre du trou.

On notera que pour ces trois principes, les arbres de rotation sont tous cylindriques et fixes vis-à-vis du réflecteur. L'axe de rotation correspond à l'axe autour duquel tourne le réflecteur, cet axe passant par les centres des arbres de rotation cylindriques.

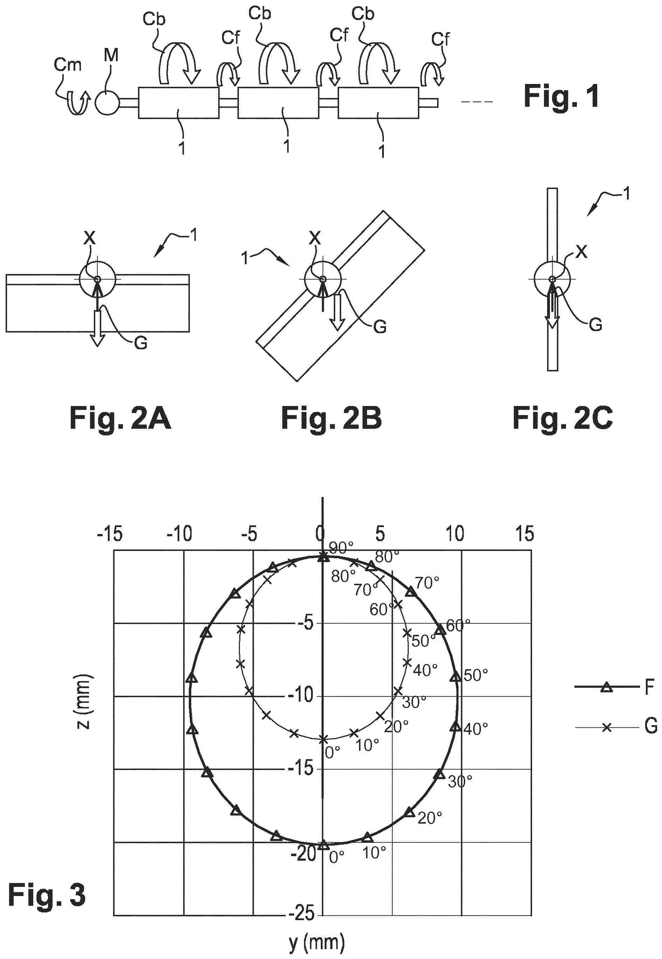

On va en outre maintenant illustrer ci-après, à l'aide de la figure 1, les efforts, ou couples de force Cb, Cf et Cm, qui s'appliquent sur une ligne de réflecteurs solaires 1 pourvu d'un moteur M pour son entraînement en rotation.

Comme indiqué précédemment, les solutions de l'art antérieur pour la mise en rotation des réflecteurs 1 ne prévoient généralement pas de tenir compte de l'évolution de position du centre de gravité au fur et à mesure de l'inclinaison des réflecteurs 1. Ainsi, sans considérer l'évolution de la position du centre de gravité, seuls les défauts d'équilibrage (ou de centrage du ou des axes de rotation) et les frottements sont pris en considération, afin d'évaluer le comportement de la ligne de réflecteurs 1 et donc son dimensionnement adéquat, en particulier en torsion.

Ainsi, comme on peut le voir sur la figure 1, le moteur M supporte les couples de frottements Cf, qui s'ajoutent au niveau de chaque palier de la ligne de réflecteurs 1. Ils sont tous dans le même sens, contraire au sens de rotation des réflecteurs 1. De plus, le moteur M supporte aussi les couples de balourds Cb (de déséquilibrage) qui auront donc un sens aléatoire et un comportement alternatif de type sinusoïdal, pouvant donc être moteurs à certains moments. Ces balourds incluent donc le défaut de positionnement initial de l'axe de rotation vis-à-vis du centre de gravité, ainsi que les balourds parasites favorables ou défavorables liés au mouvement du centre de gravité lors de l'inclinaison. Le moteur M présente ainsi un couple de moteur Cm égal à la somme de l'ensemble des couples de frottements Cf et de l'ensemble des couples de balourds maximum Cb rencontrés lors de la rotation.

Aussi, l'absence de correction du ou des axes de rotation des réflecteurs solaires à mesure que leur orientation évolue pour suivre le soleil et que la position du centre de gravité change en conséquence, a pour inconvénient majeur d'augmenter les frottements et le déséquilibrage du système, et ainsi d'augmenter le couple de moteur nécessaire à la mise en rotation des réflecteurs.

### EXPOSÉ DE L'INVENTION

Il existe par conséquent un besoin pour proposer une solution permettant de corriger la position d'équilibre d'un ou plusieurs réflecteurs solaires au fur et à mesure de leur rotation ou inclinaison, fonction de la course du soleil, pour s'adapter au changement de position du centre de gravité. En particulier, il existe un besoin pour proposer une solution permettant de corriger le ou les axes de rotation de lignes de réflecteurs en fonction de leur inclinaison.

L'invention a pour but de remédier au moins partiellement aux besoins mentionnés ci-dessus et aux inconvénients relatifs aux réalisations de l'art antérieur.

L'invention a ainsi pour objet, selon l'un de ses aspects, un procédé de guidage en rotation d'au moins un réflecteur solaire pour une centrale solaire, notamment un réflecteur du type réflecteur à miroir de Fresnel linéaire, autour d'au moins un arbre de rotation, caractérisé en ce qu'il comporte les étapes suivantes :
a) déterminer la forme graphique de gravité définie par l'évolution de la position du centre de gravité en section dudit au moins un réflecteur solaire au cours d'une rotation autour d'au moins un arbre de rotation de forme cylindrique,
b) déterminer la forme graphique d'arbre de la section d'au moins un arbre de rotation corrigé à partir de la forme graphique de gravité obtenue à l'étape a) pour la prise en compte de l'évolution de la position du centre de gravité au cours de la rotation dudit au moins un réflecteur pour l'obtention d'un centre de gravité situé sur l'axe d'appui dudit au moins un réflecteur ainsi en équilibre au cours de sa rotation,
   la forme graphique d'arbre étant obtenue par translation d'une pluralité de points de la forme graphique de gravité d'une même valeur constante pour obtenir une pluralité de points définissant la forme graphique d'arbre, la translation d'un point donné de la forme graphique de gravité de la valeur constante étant réalisée dans le sens et dans la direction de la force de gravité appliquée audit point donné.

De plus, l'invention a également pour objet, selon un autre de ses aspects, un réflecteur solaire pour une centrale solaire, entraîné en rotation par le biais d'un système de guidage en rotation notamment un réflecteur du type réflecteur à miroir de Fresnel linéaire, notamment obtenu par la mise en oeuvre du procédé de guidage en rotation tel que défini précédemment,
caractérisé en ce qu'il comporte au moins un arbre de rotation corrigé, autour duquel ledit au moins un réflecteur solaire tourne, la section dudit au moins un arbre de rotation corrigé définissant notamment une forme graphique d'arbre obtenue à partir d'une forme graphique de gravité, définie par l'évolution de la position du centre de gravité en section dudit au moins un réflecteur solaire au cours d'une rotation autour d'au moins un arbre de rotation non corrigé, par translation d'une pluralité de points de la forme graphique de gravité d'une même valeur constante pour obtenir une pluralité de points définissant la forme graphique d'arbre, la translation d'un point donné de la forme graphique de gravité de la valeur constante étant réalisée dans le sens et dans la direction de la force de gravité appliquée audit point donné, de sorte à prendre en compte l'évolution de la position du centre de gravité au cours de la rotation dudit au moins un réflecteur pour l'obtention d'un centre de gravité situé sur l'axe d'appui dudit au moins un réflecteur ainsi en équilibre au cours de sa rotation.

La solution mise en oeuvre par l'invention pour l'obtention d'une forme graphique d'arbre de la section d'au moins un arbre de rotation corrigé peut notamment consister en l'ovalisation des arbres de rotation des réflecteurs afin de déplacer l'axe de rotation pour corriger les mouvements du centre de gravité au cours de la rotation. L'axe de rotation n'est alors plus confondu avec les centres des arbres de rotation, de sorte qu'il n'y est pas fait référence pour la description de l'invention sauf s'il se réfère à un arbre de rotation cylindrique, auquel cas sa position sera au centre du cylindre.

Dans toute la description, on entend par « centre de gravité », le point d'application de la résultante des forces de pesanteur. On entend par « centre de gravité à vide », la position du centre de gravité du réflecteur non déformé, autrement dit comme si le réflecteur était dans le vide.

De plus, on entend par « position(s) du centre de gravité », la ou les positions prises par le centre de gravité lors de la rotation du réflecteur autour d'un arbre de rotation cylindrique fixe. Ces positions peuvent être tracées dans le repère terrestre ou dans un repère du réflecteur, auquel cas on parle de tracé en gravité tournante.

Par ailleurs, on entend par « arbres de rotation », les éléments d'extrémité du réflecteur permettant de réaliser la rotation du réflecteur, en particulier par le biais de liaisons du type pivot.

Enfin, on entend par « axe d'appui », l'axe vertical d'appui du réflecteur sur une structure support lors de sa rotation. Par exemple, en présence d'un seul point d'appui du réflecteur, l'axe d'appui correspond à l'axe vertical qui passe par le point d'appui. En présence de deux points d'appui du réflecteur, l'axe d'appui correspond à la médiatrice du segment reliant les deux points d'appui. La position d'équilibre du réflecteur est atteinte lorsque le centre de gravité se trouve sur l'axe d'appui. Tout décalage latéral du centre de gravité par rapport à l'axe d'appui provoque l'apparition d'un couple de force parasitaire.

Grâce à l'invention, il peut être possible d'obtenir une correction de l'équilibrage d'un réflecteur solaire tout au long de sa rotation, alors même que la position du centre de gravité varie. De cette façon, il peut être possible de limiter les couples de force parasites supplémentaires généralement dus à la variation de position du centre de gravité. L'invention peut aussi permettre de réduire les efforts dans les liaisons de réflecteurs d'une ligne de réflecteurs, et donc de réduire les couples de frottements. Autrement dit, elle peut permettre de réduire les couples de force nécessaires à la mise en rotation des réflecteurs, et ainsi diminuer les dimensions des motorisations. De plus, l'invention peut permettre de limiter les déformations des réflecteurs, ou des lignes de réflecteurs accouplées, et donc d'améliorer les performances optiques des centrales solaires. En outre, l'invention pouvant permettre de réduire les efforts, elle peut permettre de diminuer le poids des structures des réflecteurs. Elle peut également permettre d'envisager la conception de lignes de réflecteurs de diverses longueurs. Il est en outre à noter que l'invention n'implique pas l'ajout de nombreuses pièces, et présente ainsi un intérêt non négligeable en termes de complexité, de poids et de maintenance. Enfin, la flèche sous poids propre du réflecteur solaire pouvant être compensée en partie, le décalage latéral ou vertical d'éléments de miroirs du réflecteur peut également être compensé afin de limiter les pertes optiques dues à ce phénomène.

Le procédé et le système de guidage en rotation selon l'invention peuvent en outre comporter l'une ou plusieurs des caractéristiques suivantes prises isolément ou suivant toutes combinaisons techniques possibles.

L'étape b) correspond avantageusement à une ovalisation de la forme initiale en section dudit au moins un arbre de rotation de forme cylindrique pour obtenir la forme en section dudit au moins un arbre de rotation corrigé.

Les formes graphiques de gravité et d'arbre peuvent être obtenues en gravité tournante.

La forme graphique de gravité de l'étape a) peut être obtenue par simulation numérique et/ou essais de rotation sur des arbres cylindriques fixes avec mesures du couple de force induit par l'évolution de la position du centre de gravité lors de la rotation dudit au moins un réflecteur.

La section dudit au moins un arbre de rotation corrigé présente avantageusement une forme ovalisée.

En particulier, la forme ovalisée de la section dudit au moins un arbre de rotation corrigé est obtenue par ovalisation de la forme initiale dudit au moins un arbre de rotation non corrigé (de forme cylindrique). Autrement dit, partant d'un réflecteur présentant en section une forme quelconque donnée, par exemple circulaire ou polygonale, telle que par exemple triangulaire, carrée ou rectangulaire, le principe de l'invention a pour effet d'obtenir un arbre de rotation corrigé dont la forme en section correspond à une ovalisation de la forme quelconque donnée. Par exemple, dans le cas d'un réflecteur présentant une forme en section triangulaire (par exemple un treillis), l'arbre de rotation corrigé présente alors en section une forme triangulaire ovale. Dans le cas d'un réflecteur présentant une forme en section polygonale, et notamment triangulaire, carrée ou rectangulaire, l'arbre de rotation corrigé présente alors en section une forme polygonale ovalisée, autrement dit une forme polygonale avec des angles arrondis et des dimensions longitudinale et transversale différentes.

La forme en section dudit au moins un arbre de rotation corrigé peut dépendre de la rigidité dudit au moins un réflecteur. La variation d'altitude du centre de gravité étant plus importante, l'ovalisation doit être plus importante afin de compenser son déplacement, la forme devant permettre simultanément de conserver l'axe d'appui sous le centre de gravité et de maintenir le centre de gravité à une altitude constante.

Ledit au moins un arbre de rotation corrigé peut avantageusement présenter en section une forme ovale pour un réflecteur de forme parallélépipédique rectangle. Alors, la différence entre le grand rayon et le petit rayon de la forme ovale de la section dudit au moins un arbre corrigé doit être égale au déplacement vertical du centre de gravité dudit au moins un réflecteur lors de sa rotation.

La forme ovalisée de la section dudit au moins un arbre de rotation corrigé peut présenter respectivement des plus grandes dimensions longitudinale et transversale qui correspondent à la somme de deux fois le déplacement vertical, ou respectivement deux fois le déplacement horizontal, du centre de gravité dudit au moins un réflecteur.

Ladite valeur constante peut être supérieure à une valeur limite prédéterminée, notamment supérieure ou égale à 20 mm, ou supérieure ou égale à l'amplitude maximale de mouvement du centre de gravité obtenue à l'étape a), ceci afin que le point d'appui se place bien sous le centre de gravité au cours de la rotation. En effet, il peut être montré par un tracé graphique que si la valeur constante est trop faible, la correction ne se fait pas correctement et peut être néfaste.

Selon une première réalisation, la mise en rotation dudit au moins un réflecteur peut être effectuée selon le principe de rotation dit « sur vireurs », le système comportant au moins un arbre de rotation corrigé aux extrémités dudit au moins un réflecteur reposant sur deux galets, ledit au moins un arbre de rotation corrigé dudit au moins un réflecteur ayant alors deux points d'appui, un sur chaque galet.

Selon une deuxième réalisation, la mise en rotation dudit au moins un réflecteur peut être effectuée selon le principe de rotation dit « roulant », le système comportant des moyens de roulement sans glissement dudit au moins un arbre de rotation corrigé sur un plan, ledit au moins un arbre de rotation corrigé dudit au moins un réflecteur ayant alors un point d'appui sur le plan.

Le réflecteur solaire peut avantageusement être du type réflecteur à miroir de Fresnel linéaire.

En outre, l'invention a aussi pour objet, selon un autre de ses aspects, une centrale solaire, caractérisée en ce qu'elle comporte une pluralité de réflecteurs solaires tels que définis précédemment.

Les réflecteurs solaires peuvent notamment être disposés selon une pluralité de lignes parallèles de réflecteurs solaires.

Le procédé ainsi que le réflecteur et la centrale solaires selon l'invention, peuvent comporter l'une quelconque des caractéristiques énoncées dans la description, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
- la figure 1 est un schéma partiel illustrant l'application des efforts sur une ligne de réflecteurs solaires pourvu d'un moteur pour son entraînement en rotation, sans considération du changement de position du centre de gravité,
- les figures 2A, 2B et 2C illustrent respectivement, en vue de face, un exemple de réflecteur à miroir de Fresnel linéaire suivant une inclinaison de 0°, une inclinaison de 45° et une inclinaison de 90°,
- la figure 3 est un graphique illustrant l'évolution de la position du centre de gravité d'un réflecteur de forme parallélépipédique rectangle à miroir de Fresnel linéaire au cours de sa rotation sur un arbre de rotation non corrigé,
- la figure 4 est un graphique illustrant l'évolution du couple de force parasitaire induit par le déplacement du centre de gravité sur la figure 3 en fonction de l'inclinaison du réflecteur,
- les figures 5 et 6 sont des graphiques respectivement semblables à ceux des figures 3 et 4, illustrant en plus respectivement les déplacements du centre de gravité et du centre de rotation après un décalage de l'arbre de rotation non corrigé du réflecteur, et l'évolution du couple de force parasitaire après un tel décalage en fonction de l'inclinaison du réflecteur,
- la figure 7 est un graphique illustrant un premier exemple du principe du procédé de guidage en rotation d'un réflecteur solaire conforme à l'invention,
- la figure 8 est un schéma illustrant le principe de la gravité tournante,
- la figure 9 est un graphique illustrant un second exemple du principe du procédé de guidage en rotation d'un réflecteur solaire conforme à l'invention,
- la figure 10 représente, en section partielle et schématique, un premier exemple de système de guidage en rotation d'un réflecteur solaire conforme à l'invention avec un principe du type vireur,
- les figures 11A, 11B, 11C et 11D représentent diverses configurations du système de guidage de la figure 10 au cours de la rotation du réflecteur solaire avec un principe du type vireur, et
- les figures 12A, 12B, 12C, 12D, et 12E représentent, en section partielle et schématique, diverses configurations d'un deuxième exemple de système de guidage en rotation d'un réflecteur solaire conforme à l'invention au cours de la rotation du réflecteur solaire avec un principe du type roulant.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

La figure 1 a déjà été décrite précédemment dans la partie relative à l'état de la technique antérieure.

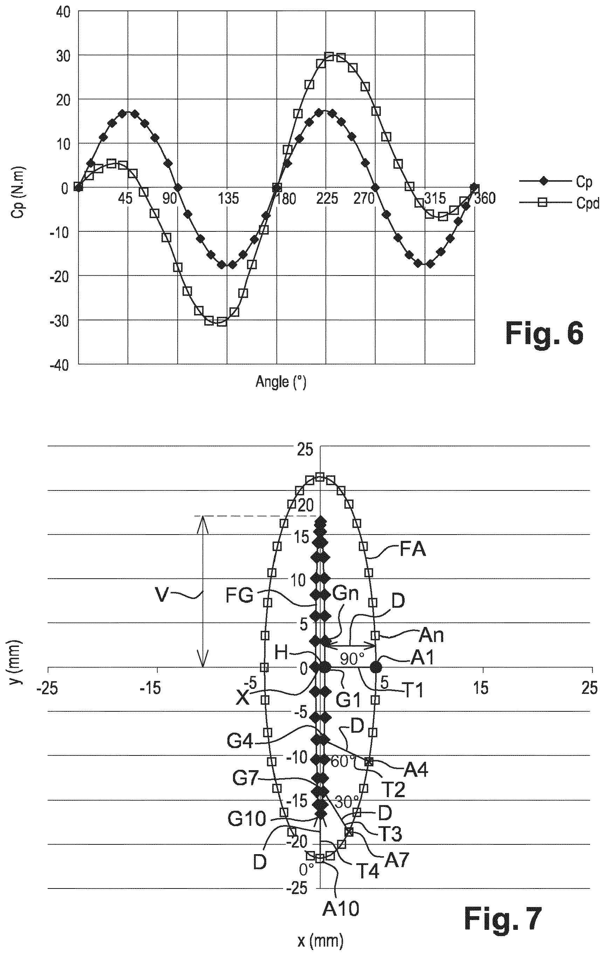

En référence aux figures 2A à 6, on expose ci-après le principe d'évolution de la position du centre de gravité G au fur et à mesure de la rotation d'un réflecteur 1 pour suivre le soleil, puis on illustre par la suite des exemples de mise en oeuvre du procédé et du système de guidage en rotation d'un réflecteur 1 conformes à l'invention en référence aux figures 7 à 12E.

### Déplacement du centre de gravité G

Tout d'abord, en référence aux figures 2A à 6, il est présenté un exemple de principe de déplacement du centre de gravité G en fonction de l'inclinaison d'un réflecteur 1. Suivant la géométrie utilisée pour le réflecteur 1, celui-ci se déforme différemment en fonction de son inclinaison.

En référence aux figures 2A, 2B et 2C, qui sont des vues de face partielles et schématiques, on illustre différentes configurations d'inclinaison d'un exemple de réflecteur 1 et l'incidence sur la position du centre de gravité G. Plus précisément, le réflecteur 1 considéré est un réflecteur parallélépipédique rectangle du type CLFR, c'est-à-dire un réflecteur à miroir de Fresnel linéaire utilisé pour les concentrateurs solaires. Celui-ci est maintenu à une première extrémité par un encastrement qui représente le moteur et à une deuxième extrémité par un palier libre en rotation.

Les figures 2A, 2B et 2C sont ainsi des résultats de simulation numérique par éléments finis qui présentent respectivement les déformées prises par le réflecteur 1 suivant une inclinaison de 0°, suivant une inclinaison de 45° et suivant une inclinaison de 90°.

Comme on peut le voir sur ces figures, la position du centre de gravité G évolue par rapport à la position de l'axe de rotation X du réflecteur 1 lorsque l'inclinaison du réflecteur 1 évolue.

En particulier, lorsque l'inclinaison du réflecteur 1 est à 45° (figure 2B), le centre de gravité G se trouve décalé latéralement par rapport à l'axe de rotation X du réflecteur 1. Ce décalage latéral induit alors un couple (moment des forces à l'axe de rotation X) qui est égal au produit de la distance du décalage latéral du centre de gravité G par le poids du réflecteur 1.

De plus, la position du centre de gravité G est également différente entre les configurations d'inclinaison à 0° (figure 2A) et à 90° (figure 2C). Plus précisément, la position verticale du centre de gravité G lorsque l'inclinaison est de 90° est plus haute que la position verticale du centre de gravité G lorsque l'inclinaison est de 0°. Ce décalage vertical entre les positions du centre de gravité G à 0° et à 90° nécessite un apport d'énergie qui est proportionnel au couple de force du moteur.

Par ailleurs, les résultats des figures 2A, 2B et 2C font ressortir deux positions d'équilibre du système, à savoir une position d'équilibre stable lorsque l'inclinaison est de 0°, car la rotation du réflecteur 1 induit un couple de force qui ramène l'ensemble à cette position, et une position d'équilibre instable lorsque l'inclinaison est de 90°, car le centre de gravité G est au point haut.

Aussi, ces résultats confirment bien l'existence d'un déplacement du centre de gravité G au cours de la rotation du réflecteur 1, qui entraîne l'apparition ou l'augmentation de couples de force parasites impactant l'efficacité de fonctionnement du réflecteur 1, et notamment le couple de force du moteur.

La figure 3 a pour objet d'illustrer graphiquement un exemple de déplacement du centre de gravité G d'un réflecteur 1 au cours de sa rotation. Le réflecteur 1 est ici un réflecteur d'environ 10 m de longueur, porté par deux appuis simples à ses extrémités.

Sur le graphique de la figure 3, l'axe des abscisses représente la position latérale y (en mm) de la flèche F sous poids propre et du centre de gravité G. L'axe des ordonnées représente quant à lui la position verticale z (en mm) de la flèche F et du centre de gravité G.

Pour obtenir ce graphique, on détermine la flèche F sous poids propre pour différentes inclinaisons du réflecteur 1, afin de déduire ainsi la position du centre de gravité G.

Par calcul, on obtient dans ce cas assimilable à une poutre en flexion sur deux appuis simples, un rapport constant d'environ 64 % entre la position du centre de gravité G et la flèche maximale F. La position du centre de gravité G décrit sensiblement un cercle, qui passe par le centre de gravité G à l'horizontal (64 % de la flèche maximale F) et qui est très proche du centre de rotation car la flèche F à 90° d'inclinaison est pratiquement nulle dans ce cas.

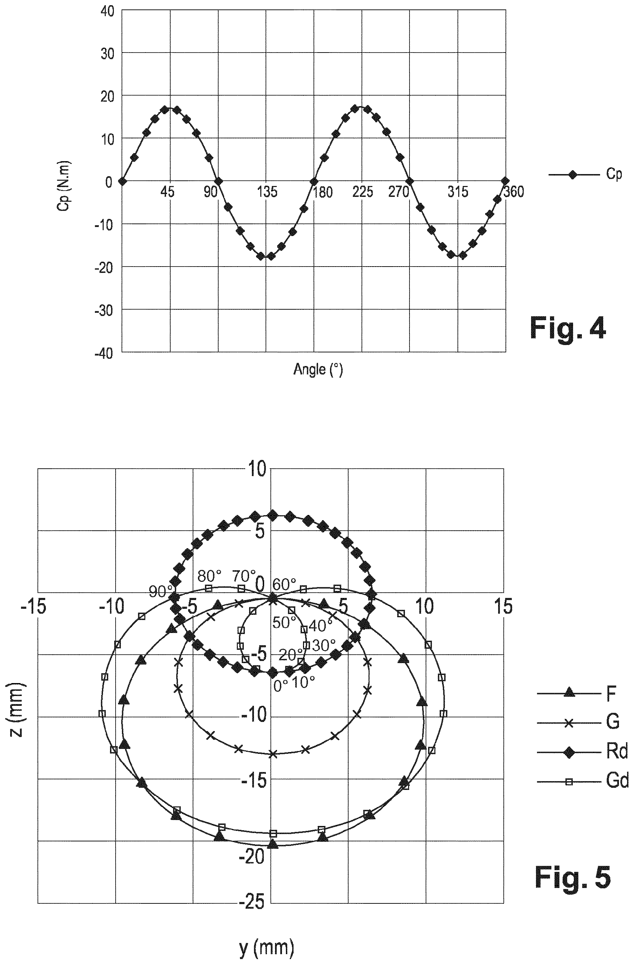

En outre, la figure 4 illustre graphiquement l'évolution du couple de force parasitaire Cp induit par le déplacement du centre de gravité G en fonction de l'inclinaison du réflecteur 1.

Sur le graphique de la figure 4, l'axe des abscisses représente l'angle d'inclinaison du réflecteur 1 par rapport à l'horizontal et l'axe des ordonnées représente le couple de force parasitaire Cp (en N.m) qui est induit par le déplacement du centre de gravité G.

Ainsi, le couple de force parasitaire Cp, induit par le phénomène de mouvement du centre de gravité G, est le plus important lorsque l'inclinaison est d'environ 45°, avec un décalage latéral égal à 64/2 % de la flèche maximale F par rapport au centre de rotation. Plus précisément, pour une flèche maximale F à l'horizontal de 20 mm, ce couple de force parasitaire Cp induit un balourd parasite équivalent à un défaut de positionnement de l'axe d'environ 6,4 mm qui s'ajoute aux défauts habituellement considérés, par exemple un décalage d'1 mm équivalent aux frottements et de 2, 5 mm pour le centrage de l'axe (balourds), soit un total de 3,5 mm.

L'apparition de ce couple de force parasitaire Cp, du fait du mouvement du centre de gravité G, se répercute sur les réflecteurs 1 pouvant être adjacents à celui considéré, de sorte qu'il est à l'origine d'une torsion de l'ensemble.

Comme indiqué précédemment dans la partie relative à l'état de la technique antérieure, on peut comme première amélioration ne faisant pas l'objet de l'invention, positionner l'axe de rotation fixe sur une position favorable à la réduction des couples parasites, notamment dans la plage de fonctionnement angulaire qui est au maximum de 180°, c'est-à-dire positionner l'axe au mieux vis-à-vis des mouvements du centre de gravité obtenus à l'étape a). En effet, il peut être envisagé de décaler légèrement l'axe de rotation X du réflecteur 1 vers le bas afin de limiter les effets de ce phénomène, par exemple un décalage d'environ 6,4 mm peut être appliqué dans ce cas lors du montage des arbres de rotation cylindriques sur le réflecteur.

Les figures 5 et 6 représentent des graphiques semblables respectivement à ceux des figures 3 et 4, illustrant en plus respectivement les déplacements du centre de gravité après décalage Gd et du centre de rotation après décalage Rd, et l'évolution du couple de force parasitaire après décalage Cpd en fonction de l'inclinaison.

Ainsi, d'un point de vu théorique, le couple de force parasitaire Cp peut être divisé par trois en conservant des arbres de rotation cylindriques et, en décalant l'axe de rotation X de 6,4 mm. Néanmoins, le couple de force nécessaire en cas de retournement, pour une inclinaison de 135° par exemple, est multiplié par deux.

Par conséquent, le décalage constant de la position de l'axe de rotation X du réflecteur 1 ne suffit pas pour s'adapter aux changements de position du centre de gravité G en fonction de l'inclinaison du réflecteur 1, et ne permet pas d'éviter les couples de force parasitaires.

Comme il est décrit par la suite, l'invention se propose d'apporter une solution permettant d'éliminer, ou du moins de réduire fortement, tout couple de force parasitaire Cp pouvant apparaître du fait des changements de position du centre de gravité G au cours de la rotation du réflecteur 1.

### Exemples de réalisation conformes à l'invention

En référence aux figures 7 à 12E, il est présenté ci-après des exemples de mise en oeuvre du procédé et du système de guidage en rotation d'un réflecteur solaire 1 conformes à l'invention.

Dans tous ces exemples, on considère notamment, comme précédemment, que le réflecteur 1 est un réflecteur parallélépipédique rectangle du type CLFR, c'est-à-dire un réflecteur à miroir de Fresnel linéaire utilisé pour les concentrateurs solaires. Une pluralité de tels réflecteurs 1 peut être située dans une centrale solaire, les réflecteurs 1 étant disposés selon une pluralité de lignes parallèles de réflecteurs 1.

De façon avantageuse, les procédés et systèmes de guidage en rotation selon l'invention décrits ci-après permettent de corriger l'axe de rotation du réflecteur solaire 1 afin de rattraper les déplacements du centre de gravité G qui sont dus au changement de la déformée sous poids propre.

Selon le principe de l'invention, on parvient à rétablir un équilibre du réflecteur 1 lors de sa rotation autour d'un arbre de rotation corrigé Xc, c'est-à-dire à conserver le centre de gravité G du réflecteur 1 sur l'axe d'appui A du réflecteur 1, par la conception d'un arbre de rotation corrigé Xc qui présente une section Sc de forme ovalisée, et notamment ovale dans le cas présent où la section Sx de l'arbre de rotation non corrigé X est de forme circulaire. Ainsi, le maintien du centre de gravité G aligné sur l'axe d'appui A du réflecteur 1 permet d'éviter, ou du moins de limiter, les couples de force parasitaires tels que décrits précédemment.

Pour obtenir la forme ovale de la section Sc de l'arbre de rotation corrigé Xc, la déformée du réflecteur 1 en fonction de son inclinaison est étudiée afin de connaître les positions G1, ..., Gn prises par le centre de gravité G au cours de la rotation du réflecteur 1. Cela peut se faire par simulation numérique ou bien par essais de rotation avec mesures du couple de force induit par l'évolution de la position du centre de gravité G lors de la rotation du réflecteur 1.

La figure 7 représente ainsi un graphique illustrant un premier exemple du principe du procédé de guidage en rotation du réflecteur 1.

Plus précisément, sur le graphique de la figure 7, l'axe des ordonnées représente la position verticale y (en mm) du centre de gravité G, et l'axe des abscisses représente la position latérale x (en mm) du centre de gravité G au cours d'une rotation du réflecteur 1.

Conformément à l'invention, le procédé de guidage en rotation du réflecteur 1 comporte l'étape a) dans laquelle on détermine la forme graphique de gravité FG définie par l'évolution de la position du centre de gravité G en section du réflecteur solaire 1 au cours d'une rotation autour de l'axe de rotation non corrigé X.

Comme on peut le voir sur la figure 7, la forme graphique de gravité FG est ovale, présentant un grand rayon égal au déplacement vertical V du centre de gravité G et un petit rayon égal au déplacement horizontal H du centre de gravité G.

Afin de concevoir alors la forme de l'arbre de rotation corrigé Xc qui permettra de placer le réflecteur 1 en équilibre lors de sa rotation, une deuxième étape b) est mise en oeuvre dans laquelle on détermine la forme graphique d'arbre FA de la section Sc de l'arbre de rotation corrigé Xc à partir de la forme graphique de gravité FG obtenue à l'étape a). De cette façon, il est possible de prendre en compte l'évolution de la position du centre de gravité G au cours de la rotation du réflecteur 1 pour l'obtention d'un centre de gravité G constamment situé sur l'axe d'appui A du réflecteur 1 ainsi en équilibre au cours de sa rotation.

Plus précisément, la forme graphique d'arbre FA est obtenue par translation d'une pluralité de points G1, ..., Gn de la forme graphique de gravité FG d'une même valeur constante D pour obtenir une pluralité de points A1, ..., An définissant la forme graphique d'arbre FA, la translation d'un point donné G1, ..., Gn de la forme graphique de gravité FG de la valeur constante D étant réalisée dans le sens et dans la direction de la force de gravité g appliquée à ce point donné G1, ..., Gn.

La valeur constante D considérée est en particulier le diamètre de la forme circulaire que forme la section Sx de l'axe de rotation non corrigé X. Dans cet exemple de la figure 7, ce diamètre D est égal à environ 4 mm.

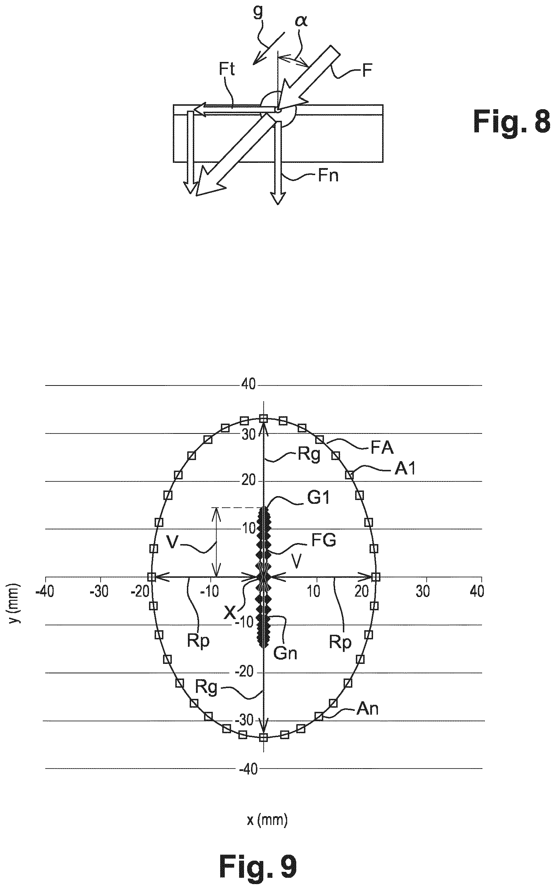

Il est à noter que dans le graphique de la figure 7 (et également dans la figure 9 décrite par la suite), les formes graphiques de gravité FG et d'arbre FA sont obtenues en gravité tournante. La figure 8 est un schéma illustrant le principe de la gravité tournante. Selon ce principe, on considère que le réflecteur 1 est fixe et horizontal tandis que la force de gravité g est tournante autour du réflecteur 1, de sorte que son module de force F soit égal à la somme de sa composante normale Fn et de sa composante tangentielle Ft. En particulier, lorsque la force de gravité g forme un angle α avec la normale au plan horizontal du réflecteur 1, on obtient alors Fn = F x cos (a) et Ft = F x sin (a).

En référence à la figure 7, on observe ainsi que chaque point A1, ..., An de la forme graphique d'arbre FA est obtenu par translation d'une valeur D du point correspondant G1, ...., Gn de la forme graphique de gravité FG en réalisant cette translation selon le sens et la direction de la force de gravité g appliquée audit point correspondant G1, ....., Gn.

Ainsi, par exemple, la translation T1 représentée correspond à une translation horizontale du point G1 lorsque l'inclinaison du réflecteur 1 est de 90°, d'une valeur D pour obtenir le point A1. De même, la translation T2 correspond à une translation inclinée du point G4 lorsque l'inclinaison du réflecteur 1 est de 60°, de la même valeur D pour obtenir le point A4. La translation T3 correspond à une translation inclinée du point G7 lorsque l'inclinaison du réflecteur 1 est de 30°, de la même valeur D pour obtenir le point A7. Enfin, la translation T4 correspond à une translation verticale du point G10 lorsque l'inclinaison du réflecteur 1 est de 0°, de la valeur D pour obtenir le point A10.

La forme graphique d'arbre FA obtenue constitue une forme révélatrice du comportement du réflecteur 1 fonction de sa géométrie, et peut permettre de comprendre les dissymétries en ce qui concerne la rigidité du réflecteur 1.

Il est à noter que, selon ce principe de construction de la forme graphique d'arbre FA, le point correspondant A1, ..., An, après translation de la valeur D selon le sens et la direction de la force de gravité appliquée au point G1, ..., Gn, est systématiquement situé sous le point G1, ...., Gn qui lui est associé.

Il est par ailleurs à noter également que plus la valeur de D sera faible, plus la forme graphique d'arbre FA se rapprochera de la forme graphique de gravité FG. De même, plus la valeur de D sera élevée, plus la forme graphique d'arbre FA passera d'une forme ovale à une forme circulaire. En particulier, la forme graphique d'arbre FA tendra vers une forme circulaire de rayon D lorsque D sera très grand.

La figure 9 est encore un graphique illustrant un second exemple du principe du procédé de guidage en rotation d'un réflecteur solaire 1 conforme à l'invention.

Le graphique de la figure 9 est obtenu de façon analogue à celui de la figure 7, la valeur de D étant toutefois ici de 20 mm, ce qui est suffisant pour que la correction fonctionne.

Dans cet exemple, on constate en effet que la valeur de D étant plus élevée, la forme ovale de la forme graphique d'arbre FA tend davantage vers une forme circulaire que la forme graphique d'arbre FA représentée sur la figure 7.

On note par ailleurs que la différence de valeurs entre le grand rayon Rg et le petit rayon Rp de la forme graphique d'arbre FA de la section Sc de l'arbre de rotation corrigé Xc est égale au déplacement vertical V du centre de gravité G du réflecteur 1. Cette caractéristique peut ainsi permettre de déduire facilement des ordres de grandeur des écarts entre le grand rayon Rg et le petit rayon Rp de la forme finale de la section Sc de l'arbre de rotation corrigé Xc.

Ainsi, de façon avantageuse, la forme ovale de la section Sc de l'arbre de rotation corrigé Xc permet de placer le ou les points d'appui du réflecteur 1 (ou centre(s) de rotation instantané(s)) sous le centre de gravité G. Il est à noter toutefois que le centre de rotation, ainsi que l'axe de rotation, sera mobile par rapport au centre de l'arbre ovale.

Le principe de l'invention peut tout particulièrement s'appliquer aux principes connus de rotation, décrits précédemment, dits « sur vireurs » et « roulant ».

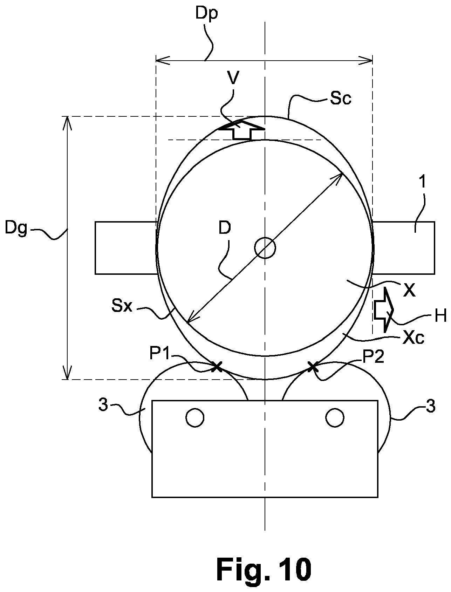

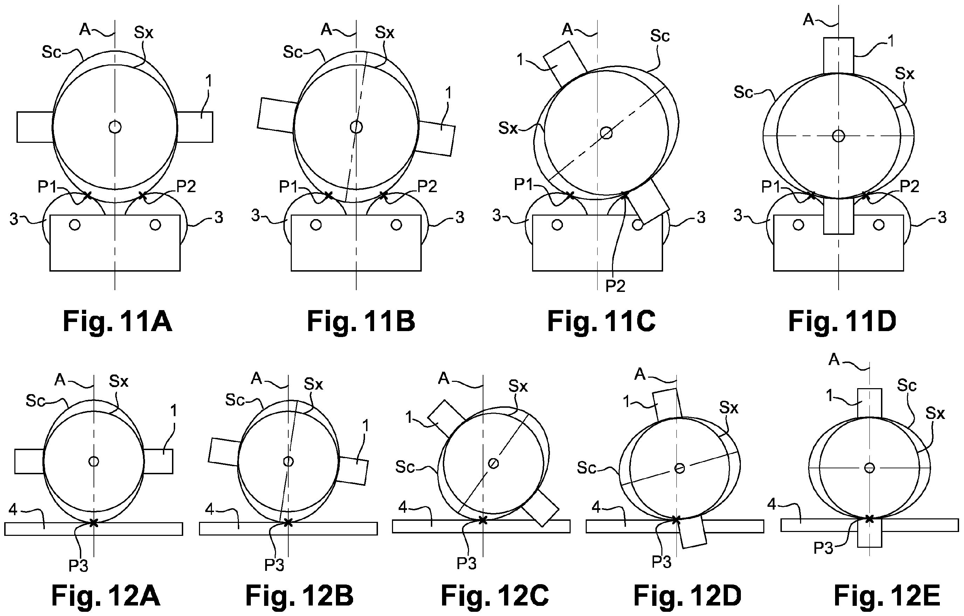

Ainsi, la figure 10 représente, en section partielle et schématique, un premier exemple de système de guidage en rotation du réflecteur 1 dans lequel le principe de rotation est du type « sur vireurs ». De plus, les figures 11A, 11B, 11C et 11D représentent diverses configurations du système de guidage de la figure 10 au cours de la rotation du réflecteur solaire 1.

Selon ce principe de rotation, le système selon l'invention comporte, aux extrémités du réflecteur 1, des arbres de rotation corrigé Xc reposant chacun sur deux galets 3. Alors, les arbres de rotation corrigés Xc présentent deux points d'appui P1, P2, un sur chaque galet 3.

On note sur la figure 10 la forme circulaire de la section Sx de l'arbre de rotation non corrigé X et la forme ovale de la section Sc de l'arbre de rotation corrigé Xc. Pour l'obtention de la forme ovale de la section Sc de l'arbre de rotation corrigé Xc, on peut prévoir des dimensions telles que la plus grande dimension longitudinale Dg soit égale à la somme du diamètre D de la forme circulaire et de deux fois le déplacement vertical V du centre de gravité G, et que la plus grande dimension transversale Dp soit égale à la somme du diamètre D de la forme circulaire et de deux fois le déplacement horizontal H du centre de gravité G du réflecteur 1.

Sur les figures 11A à 11D, l'axe d'appui A du réflecteur 1 correspond à la médiatrice du segment joignant les deux points d'appui P1 et P2. La forme ovale de la section Sc de l'arbre de rotation corrigé Xc permet d'obtenir un équilibre du réflecteur 1 lors de sa rotation, le centre de gravité G étant en permanence situé sur l'axe d'appui A. En particulier, le centre de gravité G est maintenu à une hauteur constante et toujours situé au-dessus des points d'appui P1, P2.

De façon préférentielle, l'invention peut être mise en oeuvre selon le principe de mise en rotation dit « sur vireurs ». Néanmoins, elle peut également l'être selon le principe de rotation dit « roulant ».

Ainsi, les figures 12A, 12B, 12C, 12D, et 12E représentent, en section partielle et schématique, diverses configurations d'un deuxième exemple de système de guidage en rotation du réflecteur solaire 1 conforme à l'invention au cours de sa rotation.

Selon le principe dit « roulant », le système comporte des moyens de roulement sans glissement de l'arbre de rotation corrigé Xc sur un plan horizontal 4, l'arbre de rotation corrigé Xc ayant alors un seul point d'appui P3 sur le plan 4.

Sur ces figures 12 à 12E, on constate bien que l'axe d'appui A se décale en fonction de l'inclinaison du réflecteur 1 afin de suivre les mouvements latéraux du centre de gravité G.

Bien entendu, l'invention n'est pas limitée aux exemples de réalisation qui viennent d'être décrits. Diverses modifications peuvent y être apportées par l'homme du métier.

En particulier, bien que le réflecteur 1 ait une forme de type parallélépipédique rectangle dans tous les exemples précédemment présentés et qu'ainsi la section Sc de l'arbre de rotation corrigé Xc du réflecteur 1 soit de forme ovale, il pourrait être possible d'avoir un réflecteur 1 de forme quelconque en section, et en particulier polygonale, telle que triangulaire, carrée ou rectangulaire, la forme en section de l'arbre de rotation corrigé Xc étant alors une ovalisation de cette forme quelconque.

L'expression « comportant un » doit être comprise comme étant synonyme de « comportant au moins un », sauf si le contraire est spécifié.

## Revendications

1. Procédé de guidage en rotation d'au moins un réflecteur solaire (1) pour une centrale solaire autour d'au moins un arbre de rotation (X), **caractérisé en ce qu'**il comporte les étapes suivantes :
a) déterminer la forme graphique de gravité (FG) définie par l'évolution de la position du centre de gravité (G) en section dudit au moins un réflecteur solaire (1) au cours d'une rotation autour d'au moins un arbre de rotation (X) de forme cylindrique,
b) déterminer la forme graphique d'arbre (FA) de la section (Sc) d'au moins un arbre de rotation corrigé (Xc) à partir de la forme graphique de gravité (FG) obtenue à l'étape a) pour la prise en compte de l'évolution de la position du centre de gravité (G) au cours de la rotation dudit au moins un réflecteur (1) pour l'obtention d'un centre de gravité (G) situé sur l'axe d'appui (A) dudit au moins un réflecteur (1) ainsi en équilibre au cours de sa rotation,
la forme graphique d'arbre (FA) étant obtenue par translation d'une pluralité de points (G1, ..., Gn) de la forme graphique de gravité (FG) d'une même valeur constante (D) pour obtenir une pluralité de points (A1, ..., An) définissant la forme graphique d'arbre (FA), la translation d'un point donné (G1, ..., Gn) de la forme graphique de gravité (FG) de la valeur constante (D) étant réalisée dans le sens et dans la direction de la force de gravité (g) appliquée audit point donné (G1, ..., Gn),
c) tourner ledit au moins un réflecteur solaire (1) autour dudit au moins un arbre de rotation corrigé (Xc).

2. Procédé selon la revendication 1, **caractérisé en ce que** l'étape b) correspond à une ovalisation de la forme initiale en section dudit au moins un arbre de rotation (X) de forme cylindrique pour obtenir la forme en section dudit au moins un arbre de rotation corrigé (Xc).

3. Procédé selon la revendication 1 ou 2, **caractérisé en ce que** les formes graphiques de gravité (FG) et d'arbre (FA) sont obtenues en gravité tournante.

4. Procédé selon l'une des revendications précédentes, **caractérisé en ce que** la forme graphique de gravité (FG) de l'étape a) est obtenue par simulation numérique et/ou essais de rotation sur des arbres cylindriques fixes avec mesures du couple de force induit par l'évolution de la position du centre de gravité (G) lors de la rotation dudit au moins un réflecteur (1).

5. Réflecteur solaire (1) pour une centrale solaire, **caractérisé en ce qu'**il est entraîné en rotation par le biais d'un système de guidage en rotation, notamment obtenu par la mise en oeuvre du procédé de guidage en rotation selon l'une quelconque des revendications précédentes, et **en ce qu'**il comporte au moins un arbre de rotation corrigé (Xc), autour duquel ledit réflecteur solaire (1) tourne, la section (Sc) dudit au moins un arbre de rotation corrigé (Xc) définissant une forme graphique d'arbre (FA) obtenue à partir d'une forme graphique de gravité (FG), définie par l'évolution de la position du centre de gravité (G) en section dudit réflecteur solaire (1) au cours d'une rotation autour d'au moins un arbre de rotation non corrigé (X), par translation d'une pluralité de points (G1, ..., Gn) de la forme graphique de gravité (FG) d'une même valeur constante (D) pour obtenir une pluralité de points (A1, ..., An) définissant la forme graphique d'arbre (FA), la translation d'un point donné (G1, ..., Gn) de la forme graphique de gravité (FG) de la valeur constante (D) étant réalisée dans le sens et dans la direction de la force de gravité (g) appliquée audit point donné (G1, ..., Gn), de sorte à prendre en compte l'évolution de la position du centre de gravité (G) au cours de la rotation dudit réflecteur (1) pour l'obtention d'un centre de gravité (G) situé sur l'axe d'appui (A) dudit réflecteur (1) ainsi en équilibre au cours de sa rotation.

6. Réflecteur selon la revendication 5, **caractérisé en ce que** la section (Sc) dudit au moins un arbre de rotation corrigé (Xc) présente une forme ovalisée.

7. Réflecteur selon la revendication 5 ou 6, **caractérisé en ce que** ledit au moins un arbre de rotation corrigé (Xc) présente en section (Sc) une forme ovale pour un réflecteur (1) de forme parallélépipédique rectangle.

8. Réflecteur selon la revendication 7, **caractérisé en ce que** la différence entre le grand rayon (Rg) et le petit rayon (Rp) de la forme ovale de la section (Sc) dudit au moins un arbre corrigé (Xc) est égale au déplacement vertical (V) du centre de gravité (G) dudit réflecteur (1).

9. Réflecteur selon l'une des revendications 6 à 8, **caractérisé en ce que** la forme ovalisée de la section (Sc) dudit au moins un arbre de rotation corrigé (Xc) présente respectivement des plus grandes dimensions longitudinale (Dg) et transversale (Dp) qui correspondent à la somme de deux fois le déplacement vertical (V), ou respectivement deux fois le déplacement horizontal (H), du centre de gravité (G) dudit réflecteur (1).

10. Réflecteur selon l'une quelconque des revendications 5 à 9, **caractérisé en ce que** ladite valeur constante (D) est supérieure à une valeur limite prédéterminée, notamment supérieure ou égale à 20 mm ou à l'amplitude maximale de mouvement du centre de gravité.

11. Réflecteur selon l'une quelconque des revendications 5 à 10, **caractérisé en ce que** la mise en rotation dudit réflecteur (1) est effectuée selon le principe de rotation dit « sur vireurs », le système comportant au moins un arbre de rotation corrigé (Xc) aux extrémités dudit réflecteur (1) reposant sur deux galets (3), ledit au moins un arbre de rotation corrigé (Xc) dudit réflecteur (1) ayant alors deux points d'appui (P1, P2), un sur chaque galet (3).

12. Réflecteur selon l'une quelconque des revendications 5 à 10, **caractérisé en ce que** la mise en rotation dudit réflecteur (1) est effectuée selon le principe de rotation dit « roulant », le système comportant des moyens de roulement sans glissement dudit au moins un arbre de rotation corrigé (Xc) sur un plan (4), ledit au moins un arbre de rotation corrigé (Xc) dudit réflecteur (1) ayant alors un point d'appui (P3) sur le plan (4).

13. Réflecteur selon l'une quelconque des revendications 5 à 12, **caractérisé en ce qu'**il est du type réflecteur à miroir de Fresnel linéaire.

14. Centrale solaire, **caractérisée en ce qu'**elle comporte une pluralité de réflecteurs solaires (1) selon l'une quelconque des revendications 5 à 13.

15. Centrale selon la revendication 14, **caractérisée en ce que** les réflecteurs solaires (1) sont disposés selon une pluralité de lignes parallèles de réflecteurs solaires (1).

## Patentansprüche

1. Verfahren zum Führen von wenigstens einem Sonnenreflektor (1) für ein Sonnenkraftwerk in Rotation um wenigstens eine Rotationsachse (X), **dadurch gekennzeichnet, dass** es die folgenden Schritte umfasst:
a) Bestimmen der grafischen Schwereform (FG), welche durch die Entwicklung der Position des Schwerpunkts (G) im Querschnitt des wenigstens einen Sonnenreflektors (1) während einer Rotation um die wenigstens eine Rotationsachse (X) in zylindrischer Form definiert wird,
b) Bestimmen der grafischen Achsenform (FA) des Querschnitts (Sc) von wenigstens einer korrigierten Rotationsachse (Xc) ausgehend von der grafischen Schwereform (FG), welche im Schritt a) erhalten worden ist, um die Entwicklung der Position des Schwerpunkts (G) während der Rotation des wenigstens einen Reflektors (1) zu berücksichtigen, um einen Schwerpunkt (G) zu erhalten, welcher auf der Stützachse (A) des wenigstens einen Reflektors (1) liegt, welcher derart während seiner Rotation im Gleichgewicht ist,
wobei die grafische Achsenform (FA) durch Translation einer Mehrzahl von Punkten (G1, ..., Gn) der grafischen Schwereform (FG) um einen gleichen konstanten Wert (D) erhalten wird, um eine Mehrzahl von Punkten (A1, ... , An) zu erhalten, welche die grafische Achsenform (FA) definieren, wobei die Translation eines gegebenen Punkts (G1, ... , Gn) der grafischen Schwereform (FG) um den konstanten Wert (D) im Sinne und der Richtung der Schwerkraft (g) ausgeführt wird, welche auf den gegebenen Punkt (G1, ... , Gn) wirkt,
c) Drehen des wenigstens einen Sonnenreflektors (1) um die wenigstens eine korrigierte Rotationsachse (Xc).

2. Verfahren nach Anspruch 1, **dadurch gekennzeichnet, dass** der Schritt b) einem Ovalisieren der ursprünglichen Form im Querschnitt der wenigstens einen Rotationsachse (X) in zylindrischer Form entspricht, um die Form im Querschnitt der wenigstens einen korrigierten Rotationsachse (Xc) zu erhalten.

3. Verfahren nach Anspruch 1 oder 2, **dadurch gekennzeichnet, dass** die grafische Schwereform (FG) und die Achsenform (FA) in drehender Schwere erhalten werden.

4. Verfahren nach einem der vorhergehenden Ansprüche, **dadurch gekennzeichnet, dass** die grafische Schwereform (FG) aus Schritt a) durch numerische Simulation und/oder Rotationsversuche an festen zylindrischen Achsen mit Messungen des Drehmoments einer induzierten Kraft durch die Entwicklung der Position des Schwerpunkts (G) während der Rotation des wenigstens einen Reflektors (1) erhalten wird.

5. Sonnenreflektor (1) für ein Sonnenkraftwerk, **dadurch gekennzeichnet, dass** er in Rotation mittels eines Systems zum Führen in Rotation angetrieben wird, welches insbesondere durch ein Ausführen des Verfahrens zum Führen in Rotation nach einem der vorhergehenden Ansprüche erhalten wird, und dadurch, dass er wenigstens eine korrigierte Rotationsachse (Xc) umfasst, um welche sich der Sonnenreflektor (1) dreht, wobei der Querschnitt (Sc) der wenigstens einen korrigierten Rotationsachse (Xc) eine grafische Achsenform (FA) definiert, welche ausgehend von einer grafischen Schwereform (FG) erhalten wird, welche durch die Entwicklung der Position des Schwerpunkts (G) im Querschnitt des Sonnenreflektors (1) während einer Rotation um wenigstens eine nicht korrigierte Rotationsachse (X) definiert ist, durch Translation einer Mehrzahl von Punkten (G1, ... , Gn) der grafischen Schwereform (FG) um einen gleichen konstanten Wert (D), um eine Mehrzahl von Punkten (A1, ... An) zu erhalten, welche die grafische Achsenform (FA) definieren, wobei die Translation eines gegebenen Punkts (G1, ..., Gn) der grafischen Schwereform (FG) um den konstanten Wert (D) in dem Sinn und der Richtung der Schwerkraft (g) durchgeführt wird, welche auf den gegebenen Punkt (G1, ..., Gn) wirkt, derart, dass die Entwicklung der Position des Schwerpunkts (G) während der Rotation des Reflektors (1) für das Erhalten eines Schwerpunkts (G) berücksichtigt wird, welcher auf der Stützachse (A) des Reflektors (1) angeordnet ist, welcher derart während seiner Rotation im Gleichgewicht ist.

6. Reflektor nach Anspruch 5, **dadurch gekennzeichnet, dass** der Querschnitt (Sc) der wenigstens einen korrigierten Rotationsachse (Xc) eine ovalisierte Form aufweist.

7. Reflektor nach Anspruch 5 oder 6, **dadurch gekennzeichnet, dass** die wenigstens eine korrigierte Rotationsachse (Xc) im Querschnitt (Sc) eine ovale Form für einen Reflektor (1) von rechtwinklig parallelepipedischer Form aufweist.

8. Reflektor nach Anspruch 7, **dadurch gekennzeichnet, dass** die Differenz zwischen der großen Halbachse (Rg) und der kleinen Halbachse (Rp) der ovalen Form des Querschnitts (Sc) der wenigstens einen korrigierten Achse (Xc) gleich der vertikalen Verlagerung (V) des Schwerpunkts (G) des Reflektors (1) ist.

9. Reflektor nach einem der Ansprüche 6 bis 8, **dadurch gekennzeichnet, dass** die ovalisierte Form des Querschnitts (Sc) der wenigstens einen korrigierten Rotationsachse (Xc) jeweils größere longitudinale (Dg) und transversale (Dp) Abmessungen aufweist, welche der Summe von zweimal der vertikalen Verlagerung (V) oder jeweils zweimal der horizontalen Verlagerung (H) des Schwerpunkts (G) des Reflektors (1) entsprechen.

10. Reflektor nach einem der Ansprüche 5 bis 9, **dadurch gekennzeichnet, dass** der konstante Wert (D) größer als ein vorbestimmter Grenzwert ist, insbesondere größer oder gleich 20 mm oder als die maximale Amplitude der Bewegung des Schwerpunkts.

11. Reflektor nach einem der Ansprüche 5 bis 10, **dadurch gekennzeichnet, dass** das Versetzen in Rotation des Reflektors (1) gemäß dem "auf Drehvorrichtungen" genannten Rotationsprinzip hervorgerufen wird, wobei das System wenigstens eine korrigierte Rotationsachse (Xc) an den Enden des Reflektors (1) umfasst, welche auf zwei Rollen (3) ruht, wobei die wenigstens eine korrigierte Rotationsachse (Xc) des Reflektors (1) somit zwei Stützpunkte (P1, P2) an jeder Rolle (3) aufweist.

12. Reflektor nach einem der Ansprüche 5 bis 10, **dadurch gekennzeichnet, dass** das Versetzen in Rotation des Reflektors (1) gemäß dem "rollend" genannten Rotationsprinzip hervorgerufen wird, wobei das System Rollmittel ohne Schlupf der wenigstens einen korrigierten Rotationsachse (Xc) in einer Ebene (4) umfasst, wobei die wenigstens eine korrigierte Rotationsachse (Xc) des Reflektors (1) somit einen Stützpunkt (P3) auf der Ebene (4) aufweist.

13. Reflektor nach einem der Ansprüche 5 bis 12, **dadurch gekennzeichnet, dass** er vom Reflektortyp eines linearen Fresnel-Spiegels ist.

14. Sonnenkraftwerk, **dadurch gekennzeichnet, dass** es eine Mehrzahl von Sonnenreflektoren (1) nach einem der Ansprüche 5 bis 13 umfasst.

15. Sonnenkraftwerk nach Anspruch 14, **dadurch gekennzeichnet, dass** die Sonnenreflektoren (1) entlang einer Mehrzahl von parallelen Linien von Sonnenreflektoren (1) angeordnet sind.

## Claims

1. Method for guiding in rotation at least one solar reflector (1) for a solar power plant around at least one rotating shaft (X), **characterised in that** it comprises the following steps:
a) determining the graphical representation of gravity (FG) defined by the variation in the cross-sectional position of the centre of gravity (G) of said at least one solar reflector (1) during a rotation around at least one rotating shaft (X) of cylindrical shape,
b) determining the shaft graphical representation (FA) of the cross-section (Sc) of at least one rotating shaft (Xc) corrected from the graphical representation of gravity (FG) obtained at step a) to take into account the variation in the position of the centre of gravity (G) during the rotation of said at least one reflector (1) to obtain a centre of gravity (G) situated on the bearing axis (A) of said at least one reflector (1) thus in equilibrium during its rotation,
the shaft graphical representation (FA) being obtained by translating a plurality of points (G1, ..., Gn) of the graphical representation of gravity (FG) having the same constant value (D) to obtain a plurality of points (A1, ..., An) defining the shaft graphical representation (FA), the translation of a given point (G1, ..., Gn) of the graphical representation of gravity (FG) of the constant value (D) being carried out in the sense and in the direction of the gravitational force (g) applied to said given point (G1, ..., Gn),
c) turn said at least one solar reflector (1) around said at least one rotating shaft (Xc).

2. Method according to claim 1, **characterised in that** step b) corresponds to an ovalisation of the initial cross-sectional shape of said at least one rotating shaft (X) of cylindrical shape to obtain the cross-sectional shape of said at least one corrected rotating shaft (Xc).

3. Method according to claim 1 or 2, **characterised in that** the gravity (FG) and shaft (FA) graphical representations are obtained with revolving gravity.

4. Method according to one of the preceding claims, **characterised in that** the graphical representation of gravity (FG) of step a) is obtained by digital simulation and/or rotation tests on fixed cylindrical shafts with measurements of the force torque induced by the variation in the position of the centre of gravity (G) during the rotation of said at least one reflector (1).

5. Solar reflector (1) for a solar power plant, **characterized in that** it is driven in rotation by means of a system for guiding in rotation said solar reflector (1), notably obtained by the implementation of the method for guiding in rotation according to any of the preceding claims, and **in that** it comprises at least one corrected rotating shaft (Xc), about which said solar reflector (1) turns, the cross-section (Sc) of said at least one corrected rotating shaft (Xc) defining a shaft graphical representation (FA) obtained from the graphical representation of gravity (FG), defined by the variation in the cross-sectional position of the centre of gravity (G) of said solar reflector (1) during a rotation around at least one non-corrected rotating shaft (X), by translating a plurality of points (G1, ..., Gn) of the graphical representation of gravity (FG) having the same constant value (D) to obtain a plurality of points (A1, ..., An) defining the shaft graphical representation (FA), the translation of a given point (G1, ..., Gn) of the graphical representation of gravity (FG) of the constant value (D) being carried out in the sense and in the direction of the gravitational force (g) applied to said given point (G1, ..., Gn), so as to take into account the variation in the position of the centre of gravity (G) during the rotation of said reflector (1) to obtain a centre of gravity (G) situated on the bearing axis (A) of said reflector (1) thus in equilibrium during its rotation.

6. Solar reflector according to claim 5, **characterised in that** the cross-section (Sc) of said at least one corrected rotating shaft (Xc) has an ovalised shape.

7. Solar reflector according to claim 5 or 6, **characterised in that** said at least one corrected rotating shaft (Xc) has in cross-section (Sc) an oval shape for a reflector (1) of rectangular parallelepiped shape.

8. Solar reflector according to claim 7, **characterised in that** the difference between the long radius (Rg) and the small radius (Rp) of the oval shape of the cross-section (Sc) of said at least one corrected shaft (Xc) is equal to the vertical displacement (V) of the centre of gravity (G) of said reflector (1).

9. Solar reflector according to one of claims 6 to 8, **characterised in that** the ovalised shape of the section (Sc) of said at least one corrected rotating shaft (Xc) has respectively larger longitudinal (Dg) and transversal (Dp) dimensions which correspond to the sum of two times the vertical displacement (V), or respectively two times the horizontal displacement (H), of the centre of gravity (G) of said reflector (1).

10. Solar reflector according to any of claims 5 to 9, **characterised in that** said constant value (D) is greater than a predetermined limit value, notably greater than or equal to 20 mm or to the maximum amplitude of movement of the centre of gravity.

11. Solar reflector according to any of claims 5 to 10, **characterised in that** the rotation of said reflector (1) is carried out according to the principle of rotation known as "on turning gears", the system comprising at least one corrected rotating shaft (Xc) at the ends of said reflector (1) resting on two rollers (3), said at least one corrected rotating shaft (Xc) of said reflector (1) then having two bearing points (P1, P2), one on each roller (3).

12. Solar reflector according to any of claims 5 to 10, **characterised in that** the rotation of said reflector (1) is carried out according to the principle of rotation known as "rolling", the system comprising means of slip-free rolling of said at least one corrected rotating shaft (Xc) on a plane (4), said at least one corrected rotating shaft (Xc) of said reflector (1) then having a bearing point (P3) on the plane (4).

13. Reflector according to any one of claims 5 to 12, **characterised in that** it is of the linear Fresnel mirror type.

14. Solar power plant, **characterised in that** it comprises a plurality of solar reflectors (1) according to any one of claims 5 to 13.

15. Power plant according to claim 14, **characterised in that** the solar reflectors (1) are arranged according to a plurality of parallel lines of solar reflectors (1).
